# EUROPÄISCHE PATENTANMELDUNG

(11) **EP 1 746 595 A1**
(43) Veröffentlichungstag der Anmeldung: **24.01.2007**
(21) Anmeldenummer: 06117499.1
(22) Anmeldetag: 19.07.2006
(51) Int. Cl.: G11B 20/00, G06F 12/14, G06F 21/00

(54) **Zugriffsschutzverfahren für digitale Datenträger insbesondere DVDs**

(30) Priorität: 19.07.2005 DE 102005034154
(71) Anmelder: Ferrari, Tilo, 69121 Heidelberg (DE)
(72) Erfinder: Ferrari, Tilo, 69121 Heidelberg (DE)
(74) Vertreter: Patentanwälte Kewitz & Kollegen

(57) **Zusammenfassung**

Im Einzelnen handelt es sich um ein Verfahren zur Sicherung des Zugriffs auf einen digitalen Datenträger, insbesondere einer DVD oder anderen Datenträgern, die auf den DVD-Standard basieren. Auf diese Datenträger werden die abspielbaren Daten mit Pre-Commands oder Post-Commands vor oder hinter den abspielbaren Daten versehen. Das Verfahren weist eine Reihe von Schritten auf. So wird der Benutzer vor jedem Abspielvorgang zur Eingabe eines Schlüssels durch ein Pre-Command oder Post-Command von einer Eingabeschnittstelle aufgefordert. Dieser Schlüssel wird in der Regel von dem Benutzer über ein Betreuungscenter erfragt und kann kostenpflichtig sein. Damit nicht für jeden Abspielvorgang der gleiche Schlüssel verwendet werden kann, handelt es sich vorzugsweise um Schlüsselpaare, deren einer Teil automatisch durch die Verarbeitung der Pre- und Post-Commands bestimmt wird (Algorithmus oder eine Menge von verschlüsselten Schlüsselpaaren) und deren anderer Teil über das Betreuungscenter erfragt werden muss. Für jeden Abspielvorgang erfolgt nach Eingabe des anderen Teils des Schlüsselpaares eine Überprüfung des Schlüssels oder des Schlüsselpaares durch die Pre-Commands oder Post-Commands, bevor auf die abspielbaren Daten zugegriffen werden kann. Falls die Überprüfung des Schlüssels negativ verläuft, wird das Abspielen der Daten abgebrochen. Falls die Überprüfung des Schlüssels positiv verläuft, erfolgt ein Abspielen der Daten, die für das Abspielen freigegeben worden sind.

## Beschreibung

Gegenstand des Patents ist ein Zugriffsschutzverfahren, das es erlaubt, dass Datenträger wie insbesondere DVDs nur auf der Basis eines Freigabecodes abgespielt werden können.

### Gebiet der Erfindung

Zur Sicherung von digitalen Datenträgern, wie DVDs oder den folgenden Generationen der DVD, die eine entsprechende Beschreibungssprache verwenden, bedarf es Zugriffsschutzverfahren, um unberechtigten Zugriff auf den Datenträger bzw. auf Informationen, die auf dem Datenträger enthalten sind, zu vermeiden.

So gibt es Abspiel- und Bezahlverfahren, die einen Zugriffssicherungsmechanismus enthalten, der auf der jeweiligen DVD hinterlegt ist und DVD-Inhalte vor unberechtigtem Zugriff schützt.

Einige dieser Abspiel- und Bezahlverfahren eignen sich für den Einsatz als sog. "Pay-per-View" Abspiel- und Bezahlverfahren für DVDs. Dabei erfolgt die Bezahlung für DVD-Inhalte (z.B.

Filme, Musik) typischerweise separat für jeden Zugriff auf die DVD-Inhalte.

Im Folgenden wird das, in dieses niedergelegte Bezahl- und Abspielverfahren als "offline Pay-per-View Verfahren" (kurz offlinePPV DVD oder PPV DVD) bezeichnet. Das Offline Pay-per-View-Verfahren lässt sich von den Online Pay-per-View Verfahren, dem Conditional Access basierten Bezahl- und Abspielverfahren, dem Standardabspiel- und Bezahlverfahren sowie einem serialisierten Abspiel- und Bezahlverfahren abgrenzen.

Das "Online Pay-per-View Verfahren" setzt einen Online-Zugriff auf ein zentrales Verschlüsselungs- und Zugangsverifikationssystem voraus. Dies kann über eine Internet-Verbindung oder eine Telefonmodemverbindung erfolgen. Dabei entscheidet das zentrale Verschlüsselungs- und Zugangsverifikationssystem über Abspielanfragen der DVD und ist zuständig für die Abwicklung des Bezahlvorganges.

Eine Alternative stellt der Zugriff über sog. Conditional Access Systeme dar. Dies sind Schlüsselsysteme, die auf einer individualisierten oder serialisierten Hardware-Einheit (z.B. Karten- oder chipbasierte Zugangsverifikationssysteme) hinterlegt sind. Bei diesen Verfahren wird über den Hardware-Schlüssel geprüft, ob die Abspielanfrage der Abspieleinheit gewährt werden kann oder nicht.

Das Standardabspiel- und Bezahlverfahren gewährt dem Erwerber einer DVD das Recht, die Inhalte, die auf der DVD gespeichert sind, beliebig oft wiederzugeben. Die Bezahlung erfolgt in der Regel mit der Übergabe der DVD an den Erwerber.

Beim serialisierten Abspiel- und Bezahlverfahren ist das Abspielen der DVD-Inhalte an eine Seriennummer geknüpft, mit der eine Kopie einer DVD gekennzeichnet wird. Der Abspielvorgang wird beim serialisierten Abspiel- und Bezahlverfahren nur dann gestartet, wenn eine Seriennummer eingegeben wird, die mit der auf der jeweiligen DVD-Kopie hinterlegten Seriennummer übereinstimmt.

### Überblick über die Erfindung

Aufgabe der Erfindung ist es, ein Verfahren und einen Datenträger bereitzustellen, bei dem ein Zugriff auf die Daten einer Beschränkung unterliegt.

Gelöst wird die Aufgabe mit den Merkmalen der unabhängigen Ansprüche, wobei die Unteransprüche bevorzugte Ausführungsformen darstellen.

Im Einzelnen handelt es sich um ein Verfahren zur Sicherung des Zugriffs auf einen digitalen Datenträger, insbesondere einer DVD oder andere Datenträger, die ein DVD ähnliches Format aufweisen. Es sei darauf hingewiesen, dass andere Datenträger, wie Blue Ray oder VCD, die einen ähnlichen Aufbau besitzen, ebenfalls unter die Kategorie dieser Datenträger fallen. Diese Datenträger sollten zusammen mit den abspielbaren Daten mit Pre-Commands oder Post-Commands vor oder hinter den abspielbaren Daten versehen sein.

Das Verfahren weist eine Reihe von Schritten auf. So wird zuerst ein Schlüssel durch ein Pre-Command oder Post-Command, über eine Eingabeschnittstelle eingelesen und anschließend ausgewertet. Dieser Schlüssel wird in der Regel vom Benutzer über ein Service-Center (z.B. telefonisch) erfragt. Damit der gleiche Schlüssel nicht unendlich häufig verwendet werden kann, handelt es sich vorzugsweise um ein Schlüsselpaar, dessen einer Teil automatisch durch das Lesegerät bestimmt wird, bzw. durch die Informationen auf dem Datenträger (Algorithmus oder eine Menge von verschlüsselten Schlüsselpaaren). Daraufhin erfolgt eine Überprüfung und Freischaltung des Schlüssels durch ein oder ein Set von Pre-Commands oder Post-Commands, bevor auf die abspielbaren DVD-Inhalte zugegriffen werden kann.

Falls die Überprüfung des Schlüssels negativ verläuft, wird das Abspielen der Daten abgebrochen. Falls die Überprüfung des Schlüssels positiv verläuft, erfolgt ein Abspielen der DVD-Inhalte. Damit wird vermieden, dass der Benutzer Teile der DVD-Inhalte überspringt (z.B. Kapitel) oder mit dem Abspielen der DVD-Inhalte an einer beliebigen Stelle startet. Die DVD weist eine Vielzahl von Bereichen auf, die durch ein Pre-Command oder ein Post-Command eingebunden sind, um dann den Abbruch z.B. kapitelweise zu erzeugen. In der Regel führt ein Auswurf der DVD zum Abbruch.

Bei der Nutzung eines Schlüsselpaares, das in einer möglichen großen Zahl vorzugsweise verschlüsselt auf dem Datenträger abgelegt ist, und zufällig ausgewählt wird, oder das automatisch durch einen Algorithmus in einer deterministischen Form bestimmt wird, wird ein Teil des Schlüsselpaares angezeigt, so dass der Benutzer aufgefordert wird, den anderen Teil einzugeben. Ein Service-Center, das z.B. telefonisch erreicht werden kann oder ein Betreuungsdienstleister ist in der Lage, diesen zweiten Schlüssel aufgrund des ersten Schlüssels zu ermitteln, wodurch das Schlüsselpaar vervollständigt wird.

Nachdem nun der zweite Teil des Schlüssels dem Benutzer vom Service-Center oder dem Betreuungsdienstleister mitgeteilt wurde und der Benutzer dann den zweiten Teil über das Eingabegerät (z.B. Fernbedineung und TV-Gerät) eingegeben hat, erfolgt eine Überprüfung des gesamten Schlüssels auf Zusammengehörigkeit durch die Pre-Commands bzw. Post-Commands. Das Schlüsselpaar wird dann in einem dafür geeigneten Schlüsselspeicher für eine zukünftige Überprüfung durch ein Pre-Command oder Post-Command zwischengespeichert.

Sollte es sich um eine Aufzeichnung nach dem DVD Standard handeln, so wird dafür ein DVD Dummy PGC(Programm Chain) verwendet, der ein Set bzw. eine Menge von Pre-Commands und/oder ein Set von Post-Commands, zur Ermittlung des Schlüsselpaares, enthält. Ein Teil der Pre-Commands berechnet das Schlüsselpaar nach dem oben beschriebenen Verfahren. Ein Teil der Pre-Commands zeigt einen Teil des Schlüsselpaares am Bildschirm an und fordert eine Eingabe des zweiten Teils des Schlüsselpaares, der z.B. über die Fernbedienung des TV-Gerätes) eingegeben werden kann. Dabei ist die zweite Hälfte des Schlüsselpaares über einen Service-Center oder einen Betreuungsdienstleister zu erfragen.

Ein Teil der Post-Commands liest den zweiten Teil des Schlüsselpaares am Bildschirm ein und überprüft das Schlüsselpaar, um es bei Übereinstimmung im Schlüsselspeicher zu hinterlegen, andernfalls erfolgt ein Abbruch des Vorgangs.

Nach erfolgreicher Eingabe und Zwischenspeicherung des zweiten Schlüssels des Schlüsselpaares im Schlüsselspeicher wird durch Pre- und Post-Commands der Zugriff auf DVD-Inhalte oder Teile der DVD-Inhalte gesteuert, indem bei jeder Abspielanfrage der Schlüsselspeicher ausgelesen wird und die Zulässigkeit des Schlüsselpaares geprüft wird.

Ein weiterer Bestandteil der Erfindung ist ein entsprechender Datenträger gemäß den Ansprüchen.

### Kurze Beschreibung der Zeichnungen

Im Einzelnen zeigt die
Fig. 1 den Ablauf eines Bezahl- und Abspielverfahrens "offlinePPV DVD", bei dem ein Kunde von einem Service-Center oder Betreuungsdienstleister (nachfolgend Betreuungscenter genannt) einen Teil des Schlüsselpaares anfordert,
Fig. 2 den Navigation-Layer einer DVD in Bezug auf das erfindungsgemäße Verfahren, wobei der Dummy PGC1 in mehreren Detailebenen dargestellt ist,
Fig. 3 den Ablauf des Abspielvorgangs einer DVD.

### Detaillierte Beschreibung der Ausführungsformen

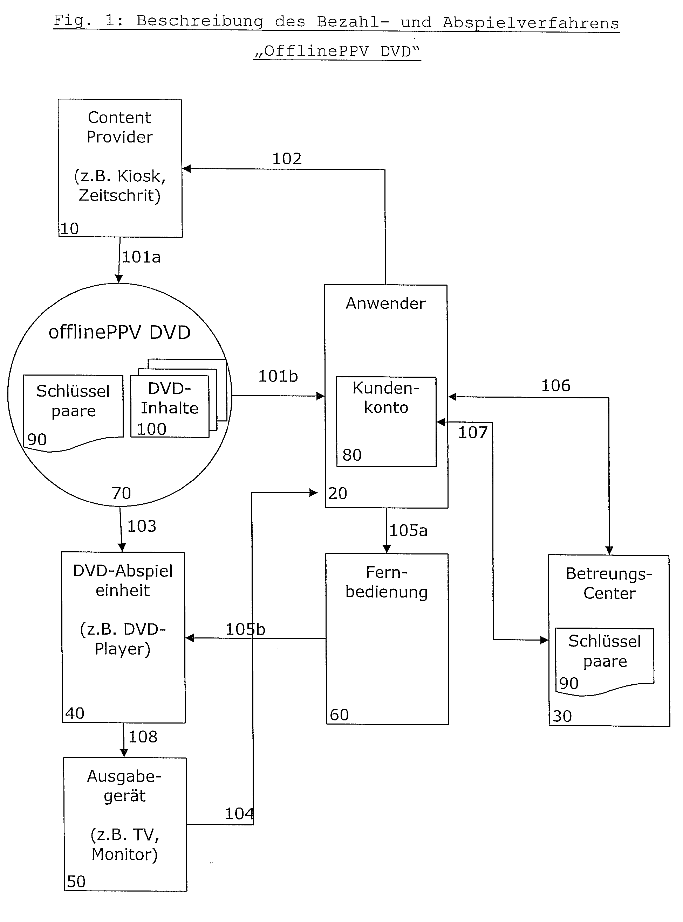

Die Fig. 1 beschreibt das Abspiel- und Bezahlverfahren "Offline PPVDVD". Der Content Provider 10 vertreibt 101a)+b) z.B. offlinePPV DVDs 70 an Anwender 20 und erhält im Gegenzug optional eine Bezahlung 102. Auf der OfflinePPV DVD 70 ist eine Liste mit Schlüsselpaaren 90 hinterlegt. Die gleiche Liste ist im Betreuungscenter 30 hinterlegt. Optional kann die Liste der Schlüsselpaare auch ein Algorithmus sein, der deterministisch ist, und der auch im Betreuungscenter verwendet werden kann, um die Teile des Schlüsselpaares zu bestimmen.

Der Anwender 20 legt die OfflinePPV DVD 70 in die DVD-Abspieleinheit 40 ein 103 und startet die Abspielfunktion.

Das DVD-Abspielgerät 40 wählt, nach dem Zufallsprinzip, aus der Liste der Schlüsselpaare 90 ein Schlüsselpaar aus und zeigt den einen Teil des ausgewählten Schlüsselpaares über die Ausgabeeinheit 50 an (Schritt 108). Alternativ kann das Schlüsselpaar durch einen Algorithmus bestimmt werden. Diese Variante ist nicht dargestellt.

Der Anwender 20 wird aufgefordert 104, dem DVD-Abspielgerät 40 über die Fernbedienung 60 den anderen Teil des Schlüsselpaares mitzuteilen, siehe 105a und 105b.

Den fehlenden Teil des Schlüsselpaares erhält der Anwender 20, indem er mit dem Betreuungscenter 30 Kontakt aufnimmt und den fehlenden Teil des Schlüsselpaares erfragt 106. Die Aushändigung des fehlenden Schlüsselpaares kann optional mit der Durchführung einer Bezahltransaktion 107 verbunden werden.

Nach Eingabe des fehlenden Schlüsselpaares 105b, z. B. über die Fernbedienung 60, vergleicht das DVD-Abspielgerät 40 das Schlüsselpaar mit dem auf der OfflinePPV DVD 70 ausgewählten Schlüsselpaar 90.

Stimmen die Angaben überein, wurde also über die Fernbedienung 60 der richtige Teil des Schlüsselpaares am Ausgabegerät 50 eingegeben, so startet das DVD-Abspielgerät mit der Wiedergabe der DVD-Inhalte 100.

Der Vorgang kann beliebig oft wiederholt werden. Bei jedem Abspielvorgang wird ein anderer Teil eines Schlüsselpaares aus der Liste der Schlüsselpaare 90 ausgewählt, für das der Anwender über das Betreuungscenter 30 den dazugehörigen anderen Teil des Schlüsselpaares beim Betreuungscenter 30 hinterfragen muss, um den Abspielvorgang zu starten. Dies wird durch einen Zufallsalgorithmus sichergestellt, der z.B. auf der Uhrzeit des DVD-Players basiert.

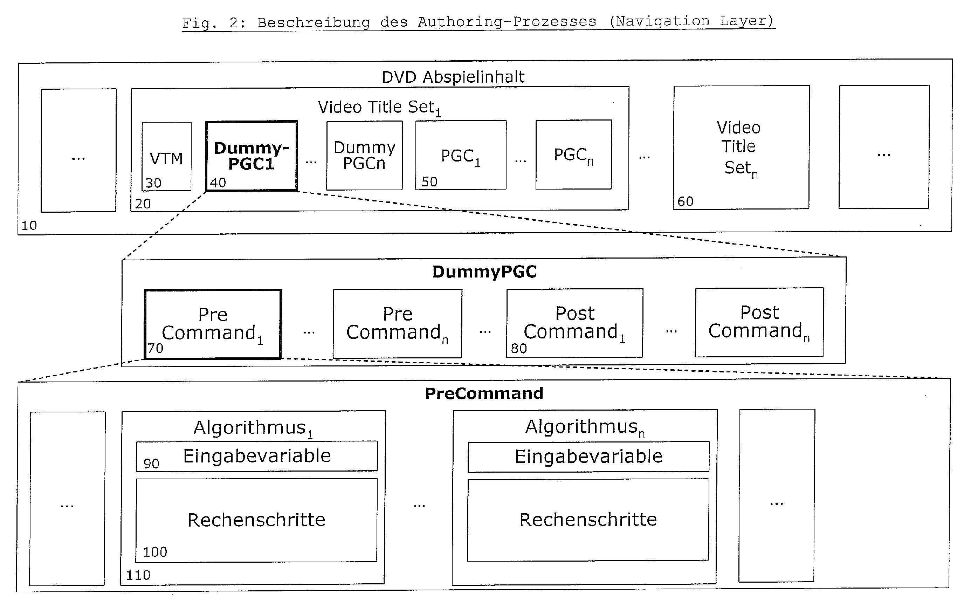

Die Fig.2 schematisiert den Authoring-Prozess, wie er bei der Herstellung eines DVD Inhalts durchgeführt wird.

Der Authoring-Prozess beschreibt Arbeitsschritte, um DVD-Abspielinhalte 10 für das Offline Pay-per-View Verfahren vorzubereiten. DVD-Abspielinhalte werden logisch (Navigation Layer) zu einem oder mehreren VideoTitleSets 20 zusammengefasst. Jedes VideoTitleSet 20 besteht aus einer definierten Anzahl von ProgrammChains (PGC) 50, in denen die eigentlichen Abspielinhalte zusammengefasst werden, und DummyPGCs 40. DummyPGCs 40 bestehen, wie PGCs, aus einem PreCommand-Bereich 70 und einem PostCommand-Bereich 80, jedoch in der Regel aus keinem Bereich, der auf Abspielinhalte verweist. Ein VideoTitleSet 20 gibt an, welche DummyPGCs 40 und PGCs 50 während des Abspielvorgangs in welcher Reihenfolge aufgerufen und ausgeführt werden.

Ein DummyPGC 40 besteht aus einem PreCommand-Bereichen 70 und einem PostCommand-Bereichen 80. Beide Bereiche enthalten jeweils Befehle, die der Reihe nach abgearbeitet werden, wenn der Pre-Command 70 oder Post-Command Bereich 80 durchlaufen wird.

Für das Offline Pay-per-View Verfahren werden im PreCommand-Bereich 70 Algorithmen 110 zur Berechnung der Zahlenschlüssel hinterlegt. Ausgehend von einer konstanten Eingabevariablen 90 (z.B. die Länge eines bestimmten VideoTitleSets oder eines bestimmten PCGs oder die Uhrzeit des DVD-Abspielgerätes), die den ersten Teilschlüssel enthält, wird über mehrere Rechenschritte 100 der dazugehörige zweite Teilschlüssel berechnet. Eingabevariable und Rechenweg sind für jeden Algorithmus 110 vorzugsweise fest miteinander verknüpft und können im Betreuungscenter (vgl. Fig. 1. Beschreibung des Bezahl- und Abspielverfahrens OfflinePPV DVD) entsprechend simuliert werden. Alternativ kann der Algorithmus 110 auch aus festen Zahlenpaaren bestehen auf die über eine Zufallsvariable zugegriffen wird.

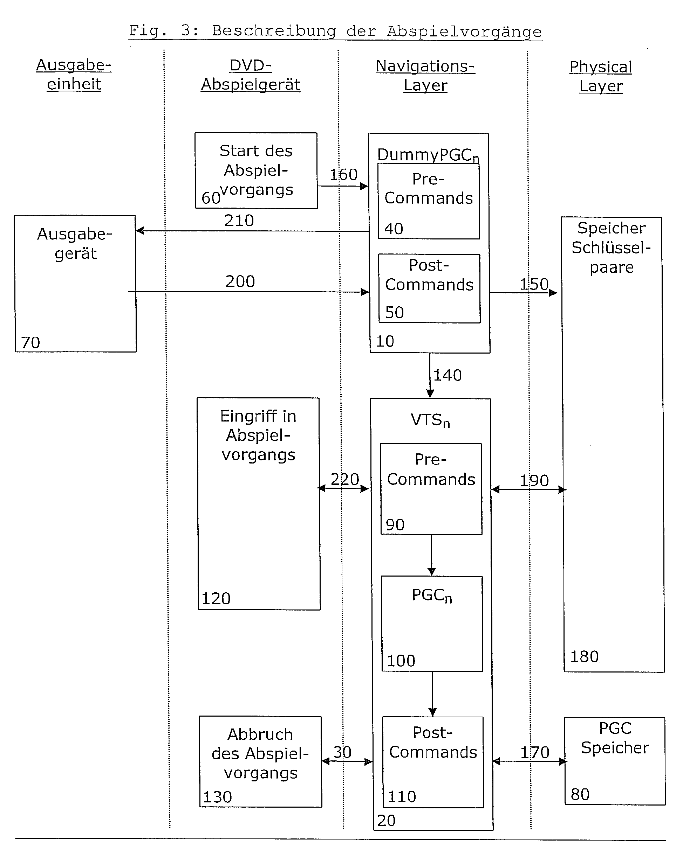

Die Fig.3 ist eine Beschreibung der Abspielvorgänge (Navigation). Am Anfang steht der Start des Abspielvorgangs 60. Der Abspielvorgang wird durch eine Benutzereingabe über das DVD-Abspielgerät gestartet 60. Der Start des Abspielvorgangs bewirkt den Aufruf 160 eines DummyPGCs 10. Dieser enthält ein Set von PreCommands 40 und ein Set von PostCommands 50. Ein Teil der PreCommands 40 bewirkt die Auswahl bzw. Berechnung eines Schlüsselpaares, nach dem für dieses DummyPGC hinterlegten Algorithmus (vgl. Fig. 2 "Beschreibung des Authoring Prozesses").

Es erfolgt die Ausgabe 210 eines Teiles des Schlüsselpaares an das Ausgabegerät 70 und die Aufforderung zur Eingabe des dazugehörigen Teilschlüssels 200.

Ein Teil der PostCommands 50 vergleicht die Eingabe mit dem berechneten zweiten Teil des Schlüsselpaares. Stimmen die Eingaben überein, so wird das gültige Schlüsselpaar im Schlüsselspeicher 180 hinterlegt. Anschließend wird ein Video Title Set (VTS) 20 oder eine Abfolge von VTS 20 abgerufen.

Der Pre-Command Bereich 90 einer VTS 20 sperrt standardmäßig alle Funktionen der DVD-Bedienung. Eine Freigabe der Bedienungsfunktionen erfolgt erst nach Abfrage des richtigen Schlüsselpaares durch Abgleich 190 mit dem Schlüsselspeicher 180.

Nach Freigabe der Bedienungsfunktionen werden die PGC 100 angesteuert, auf denen sich die DVD-Inhalte des betreffenden Video Title Sets 20 befinden.

Nach dem Durchlauf des PCGs 100 werden die PostCommands 110 bearbeitet. Ein Teil der Post-Commands speichert 170 die Information, dass der jeweilige PGC abgespielt wurde, in den PGC Speicher 80.

Bei Eingriffen in den Abspielvorgang 120 (z.B. Pause, Vorspulen, Zurückspulen) werden folgende Aspekte berücksichtigt.

Erfolgt ein Eingriff in den Abspielvorgang 220, so wird dieses Kommando an den aktiven VTS 20 abgesendet.

Nach dem Eingriff wird der Abspielvorgang an einen definierten VTS 20 wieder aufgenommen. Innerhalb des VTS 20 prüft 190 ein ausgewählter Teil der Pre-Commands 90, ob die Freigabe der Bedienungsfunktionen auf Basis der hinterlegten Angaben im Speicher für die Schlüsselpaare 180 legitimiert ist.

Nach Freigabe der Bedienungsfunktionen werden die PGC 100 angesteuert, auf denen sich die DVD-Inhalte des betreffenden Video Title Sets 20 befinden.

Nach dem Durchlauf des PCGs 100 werden die PostCommands bearbeitet 110. Eines dieser PostCommands speichert 170 die Information, dass der jeweilige PGC 100 abgespielt wurde, in den PGC Speicher 80.

Beim Abbruch des Abspielvorgangs 130 wird die Bearbeitung des zu diesem Zeitpunkt aktuellen VTS 20 abgebrochen. Einen Teil der Befehle innerhalb der PostComands 110 speichert die Information im PGC Speicher 80, der zuletzt vollständig abgespielt wurde.

Weitere Details des Aufbaus von DVDs können "An Introduction to DVD March 2003 by Graham Sharpless Disctronics Manufacturing (UK) Ltd", oder "DVD Demystified, second Edition, Authoriative Guide to DVD Technology, McGrawHill (ISBN 0-07-135026-8), Universal Disk Format Specification Revison 2.5, April 30,2003" entnommen werden.

Die bevorzugten Ausführungsformen stellen keine Beschränkungen dar, der Schutzumfang soll vielmehr auf der Basis der folgenden Ansprüche bestimmt werden.

## Patentansprüche

1. Verfahren zur Sicherung des Zugriffs auf einen digitalen Datenträger, wie eine DVD, auf dem abspielbare Daten mit Pre-Commands oder Post-Commands vor oder hinter den abspielbaren Daten versehen sind, mit folgenden Schritten: a) Einlesen eines Schlüssels durch ein Pre-Command oder Post-Command, über einer Eingabeschnittstelle,
b) Überprüfen des Schlüssels durch ein Pre-Command oder Post-Command, bevor auf die abspielbaren Daten zugegriffen wird, falls die Überprüfung des Schlüssels negativ verläuft, Abbruch des Abspielens der Daten, falls die Überprüfung des Schlüssels positiv verläuft, Abspielen der Daten

2. Das Verfahren nach dem vorhergehenden Anspruch, wobei durch eine Vielzahl von Pre-Commands oder Post-Commands der Schlüssel kontinuierlich zu unterschiedlichen Zeitpunkten überprüft wird.

3. Das Verfahren nach einem oder mehreren der vorhergehenden Ansprüche, wobei ein Auswurf des Datenträgers erfolgt, falls der Schlüssel nicht passt.

4. Das Verfahren nach einem oder mehreren der vorhergehenden Ansprüche, wobei der Schlüssel ein Schlüsselpaar ist.

5. Das Verfahren nach dem vorhergehenden Anspruch, wobei das Verfahren folgende Schritte umfasst:
- eine zufällige Auswahl eines Schlüsselpaares, die Anzeige eines ersten Teiles des Schlüsselpaares, mit der Aufforderung der Eingabe des zweiten Teiles des Schlüsselpaares und
- Überprüfung des gesamten Schlüssels auf Zusammengehörigkeit.

6. Das Verfahren nach einem oder mehreren der vorhergehenden beiden Ansprüche, wobei die Schlüsselpaare oder Teile der Schlüssel verschlüsselt in einem Speicherbereich auf dem Datenträger abgelegt sind.
und /oder
wobei die Schlüsselpaare mit einem Algorithmus berechnet werden.

7. Das Verfahren nach einem oder mehreren der vorhergehenden Ansprüche, wobei der eingelesene Schlüssel in einem Speicherbereich, wie einem PGC Speicher, gespeichert wird, zur weiteren zukünftigen Überprüfung durch ein Pre-Command oder Post-Command.

8. Das Verfahren nach einem oder mehreren der vorhergehenden Ansprüche, wobei der digitale Datenträger nach dem DVD-Standard, oder einem auf dem DVD-Standard aufbauenden Standard erstellt worden sind.

9. Das Verfahren nach dem vorhergehenden Anspruch, wobei
- das DVD Dummy PGC(Programm Chain) ein Set von Pre-Commands und/oder ein Set von Post-Commands, zur Ermittlung des Schlüsselpaares, enthält,
- ein Teil der Pre-Commands das Schlüsselpaar nach einem vorgegebenen Verfahren berechnet.
- ein Teil der Pre-Commands einen Teil des Schlüsselpaares am Bildschirm anzeigt und zur Eingabe des zweiten Teils des Schlüsselpaares auffordert,
- ein Teil der Post-Commands den zweiten Teil des Schlüsselpaares am Bildschirm einliest und das Schlüsselpaar überprüft, um es bei Übereinstimmung im Schlüsselspeicher zu hinterlegen, andernfalls wird abgebrochen.

10. Das Verfahren nach den vorhergehenden beiden Ansprüchen,
wobei in einem oder mehreren VTS durch einen Pre-Command oder einen Post-Command der Zugriff auf ein PGC gesteuert wird, indem der Schlüsselspeicher ausgelesen und die Zulässigkeit des Schlüsselpaares geprüft wird.

11. Digitaler Datenträger, dessen Daten mit Pre-Commands oder Post-Commands eingebunden sind, die vor dem Zugriff auf die Daten ausgeführt werden, wie bei DVDs, wobei in mindestens einem Pre-Command ein Schlüssel überprüft wird, der mindestens einmal manuell eingegeben wurde, um dann den Zugriff auf die Daten zu erlauben.
und wobei vorzugsweise die Überprüfung durch Pre-Commands kontinuierlich jedes Mal beim Abspielen eines Teils der Daten erfolgt.

12. Der digitale Datenträger nach einem oder mehreren der vorhergehenden Datenträgeransprüchen, wobei eine Vielzahl von Schlüsselpaaren in einem Speicherbereich abgelegt sind, die zusätzlich verschlüsselt sein können, wobei eines der Pre-Commands oder Post-Commands so ausgebildet ist, dass ein Schlüsselpaar zufällig auswählt wird.
und
wobei vorzugsweise eines der Pre-Commands oder Post-Commands so ausgebildet, dass ein Einlesen eines Schlüssels des Schlüsselpaares erfolgt.
und
wobei vorzugsweise eines der Pre-Commands oder Post-Commands so ausgebildet ist, dass der Schlüssel in einem Speicherbreich, wie einem PGC Speicher abgelegt wird.

13. Der digitale Datenträger nach einem oder mehreren der vorhergehenden Datenträgeransprüche, wobei der Datenträger eine DVD ist, wobei
- ein DVD Dummy PGC(Programm Chain) ein Set von Pre-Commands oder ein Set von Post-Commands zur Ermittlung des Schlüsselpaares enthält,
- ein Teil der Pre-Commands einen Teil des Schlüsselpaares am Bildschirm anzeigt und zur Eingabe des zweiten Teils des Schlüsselpaares auffordert,
- ein Teil der Post-Commands den zweiten Teil des Schlüsselpaares am Bildschirm einliest und das Schlüsselpaar überprüft, um es bei Übereinstimmung im Schlüsselspeicher zu hinterlegen oder andernfalls abzubrechen,
- in einem oder mehreren VTS durch ein Pre-Command oder ein Post-Command der Zugriff auf ein PGC gesteuert wird, indem der Schlüsselspeicher ausgelesen und die Zulässigkeit des Schlüsselpaares geprüft wird.
